# EUROPEAN PATENT APPLICATION

(11) **EP 1 757 200 A1**
(43) Date of publication of application: **28.02.2007**
(21) Application number: 06017038.8
(22) Date of filing: 16.08.2006
(51) Int. Cl.: A45C 15/00, F16M 13/00

(54) **Support for a suitcase and suitcase provided with this support**

(30) Priority: 22.08.2005 IT MI20051585
(71) Applicant: GISA S.R.L., 28068 Romentino NO (IT)
(72) Inventor: Guaglio, Antonio, 28068 Romentino (NO) (IT)
(74) Representative: Zanella, Ireneo

(57) **Abstract**

Support (1) for cases (1), in particular made of a rigid material like plastic, metal sheet, for example of aluminium, aluminium alloys, and the like, comprising two or four case external plates (3, 4), which are provided with cup-like seats (14) adapted to housing respectively one leg (16) for the assembling thereof, as well as elastic clip-like open collars (23) adapted to housing said case legs (16) in the replacement position thereof, as well as inside plates (12) adapted to be secured to said external plates (3, 4) by means of screws which also traverse corresponding holes provided in one case side (9) assembled with the support (2). In an embodiment is also provided a supporting element (26) formed by two cantilevered brackets (25) in the assembled position. The proposed support (2) may be installed on cases of any shape and size.

## Description

### Technical field

The present invention relates to a support for a suitcase and to a suitcase provided with this support according to the preambles of claims 1 and 13.

### Background of the invention

In the context of this description with the term "case" are intended suitcases, small suitcases, bags and other manually portable case-like containers made of rigid materials and having any shape and embodiment.

Frequently similar cases are used as specific containers for items to be temporary used or shown and then replaced in said cases like implements and tools for craftsmen, electricians, mechanicians, or bruches, colour containers and so on for painters or demonstration items as usual for representatives and agents or pick-nick sets for excursions, and so on.

With similar uses of said cases, for example for repairing and installation purposes both in houses or flats and in building yards as well as in case of use in open air as typical for painters or in practising sports as for fishermen or anglers the used cases are usually placed on the ground, and that on places which are more or less near the place of use of the implements or tools so that the taking and replacement movements of the latter require frequent bending and raising movements of the user.

Beside the discomfort of use it is apparent that the cases, under the above mentioned use conditions, may become dirty and in case of even if small movements on the ground when used in open air or on floor foundations when used in building yards the cases may become scratched which spoils the look thereof.

For avoiding these drawbacks in the Italian document IT 235438 U is disclosed a case having a variable geometry in which to a case side is removably associated a support frame having the same size as the case size and at the frame corners are supported telescopic legs which latter are hinged and cooperate with positioning levers which are as well hinged on said frame.

This embodiment requires an expensive construction and assembly and has the important disadvantage to require for the support frame exactly the same size and outline as provide for the case so that it would be necessary to provide a respective support frame for each case size.

Another drawback is to be seen in the fact that on the case are to be applied securing means which cooperate with counter-securing means provided on the support frame so that said securing means on the one hand require additional application and finishing steps which raise the case price and, on the other hand, are always visible and therefore spoil the look of the case even with support frame removed from the case.

Still another drawback is to be seen in the fact that the proposed support frame could be carried out, even with greater costs, in the case of cases having great flat sides and rounded corners whereas said support frame would be still more complicated and costly in the case of cases having rounded case edges as usual for cases made of plastic or aluminium alloys.

### Summary of the invention

The main object of the present invention is to provide a support for cases and cases provided with said support which allow to avoid the drawbacks of the prior art and permit a quick and simple assembly of the support with any kind of cases made of rigid material irrespective of the case form and size.

This object is achieved according to the invention with a support and a case provided with the latter which have the features set forth in claims 1 and 13,

With the support according to the invention and the case provided with said support several and important advantages are obtained.

First of all the proposed support may be directly assembled with the case without requiring a preliminary securing to the case of securing means cooperating with counter-securing means on the support so that the support according the invention may be assembled at any time with any case bought on the market or already available to the user.

The fastening can be easily carried out after having made on a large case side some holes for throughgoing screws to be secured in a simple and quick manner to counter-support plates housed inside the case. When providing a fastening of the support by means of an adhesive or glue or a biadhesive tape it is advantageously possible to eliminate the mentioned inside plates and holes in the case.

The support has clip-like open collars for a quick and easy removing from the latter and replacing in the latter of support telescopic legs, wherein said telescopic legs are quickly and easily insertable in and removable from a respective cup-like or sleeve-like housing seat which is likewise provided on the support according to the invention.

The single support components may be made of plastic and therefore will not require costly finishing steps, for example like painting, and therefore they are cheap and light and increase the total weight of a case provided with the support according to the invention only in a minimal way.

The leg assembling and disassembling handling may be carried out in a simple and quick manner without requiring the use of any implement or tool.

In an easy manufacturable embodiment it is further provided a cantilevered table-like element formed by two brackets which may be quick and easily installed and replaced in the support.

By replacing the few securing screws of the support with screws having a boss-like head, to be applied to the case after support removal, the case may be used as a traditional case, which is embellished by the visible screw boss-like heads.

The assembling of the support inside the case does not substantially reduce the internal case volume and the use of the case.

The inside support plates are carried out with the same conformation of the one-piece external plates provided for cases having a middle-small size and are likewise provided with an equal conformation and are singularly divisible in two plate-halves which may be utilized for cases having a middle-large size. This has the advantage that on the one hand a limited number of molds for the production of the single support components is required, and on the other hand the support itself is adapted to be assembled on cases with any size and conformation.

### Brief description of the drawings

Further features, advantages and details of the support according to the invention and of the cases provided with said support will be further apparent from the following description of two preferred exemplary embodiments of a support according to the invention and illustrated in the drawings, in which:
Figure 1 shows a perspective view slightly from the top of a case provided with a support according to the invention in the position with the legs installed,
Figure 2 shows a perspective view from the bottom of a case provided with a support according to the invention in the closed position and with the support in its replacement position,
Figure 3 shows a perspective view of an open case according to the invention during the assembling phase,
Figure 4 shows an exploded perspective view from the bottom of the support according to the invention,
Figure 5 shows in perspective views from the bottom the external one-piece plates of the support according to the invention, to be installed on a middle size case, as illustrated in Figure 2,
Figure 6 shows a top view on a one-piece plate of Figure 5,
Figure 7 shows the one-piece plate of Figure 6 in an elevation frontal view,
Figure 8 shows a top view and a perspective view of one of the four internal plates, having the same conformation, of the support according to the invention,
Figure 9 shows a perspective view from the bottom of said two one-piece plate of Figures 2 to 7 in the state singularly divided in plate-halves, for assembling the support on middle-large size cases,
Figure 10 shows a perspective view slightly from the top on a version of the support and case according to the invention having two brackets forming a table-like element, in the cantilevered installed position,
Figure 11 shows a perspective view from the bottom of the case with brackets of Figure 10,
Figure 12 shows a perspective view from the bottom of the case according to Figure 10 and 11 in the closed position and with the brackets in the replacement position, and
Figure 13 shows in an exploded and perspective view from the bottom the support according to the invention, wherein for clarity purposes only one bracket is shown.

### Description of the preferred embodiments

In the shown Figures, which are made on different scales for a better understanding thereof, equal or equivalent parts are denoted by equal reference numerals.

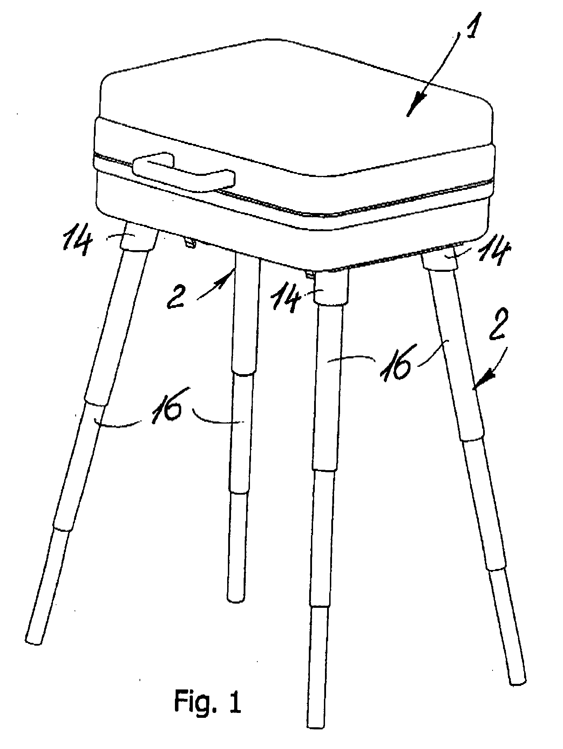

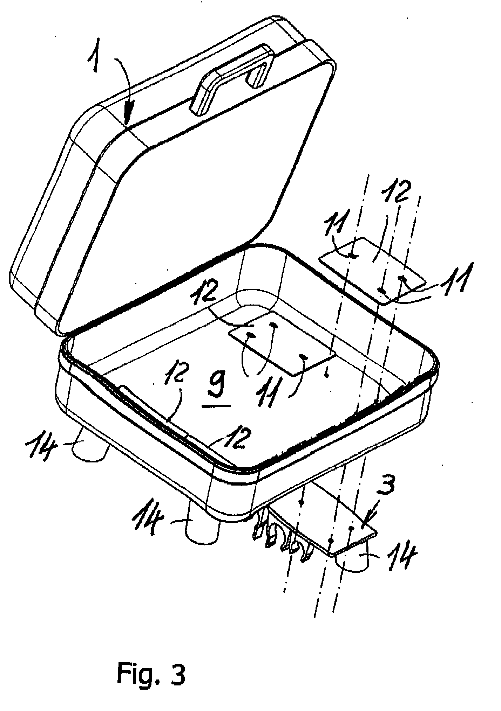

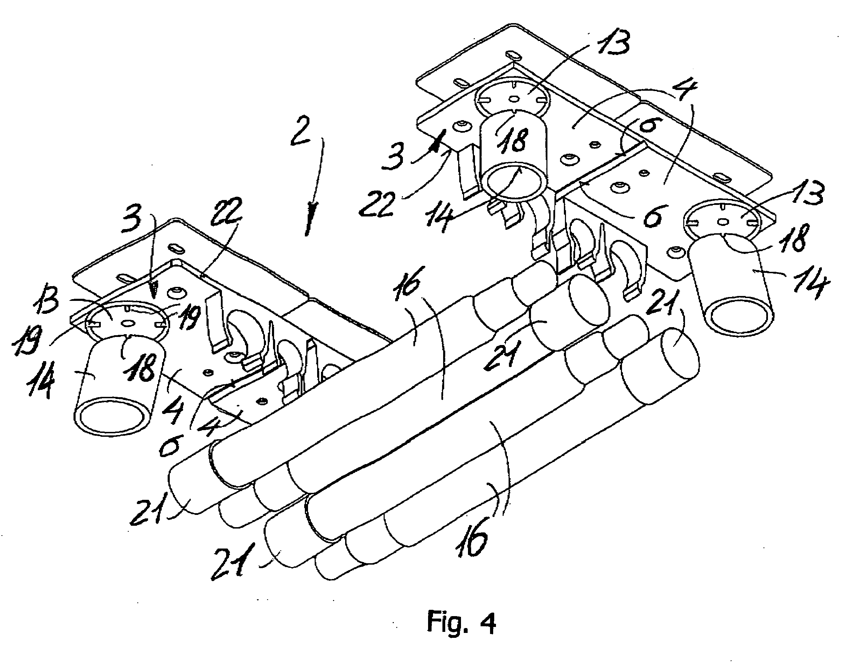

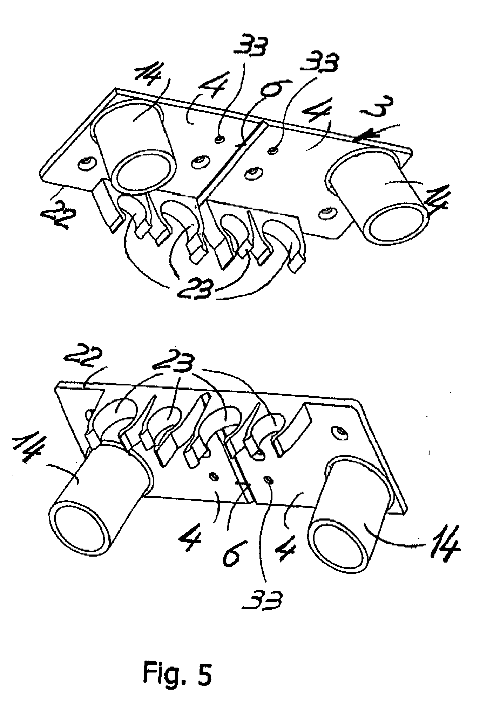

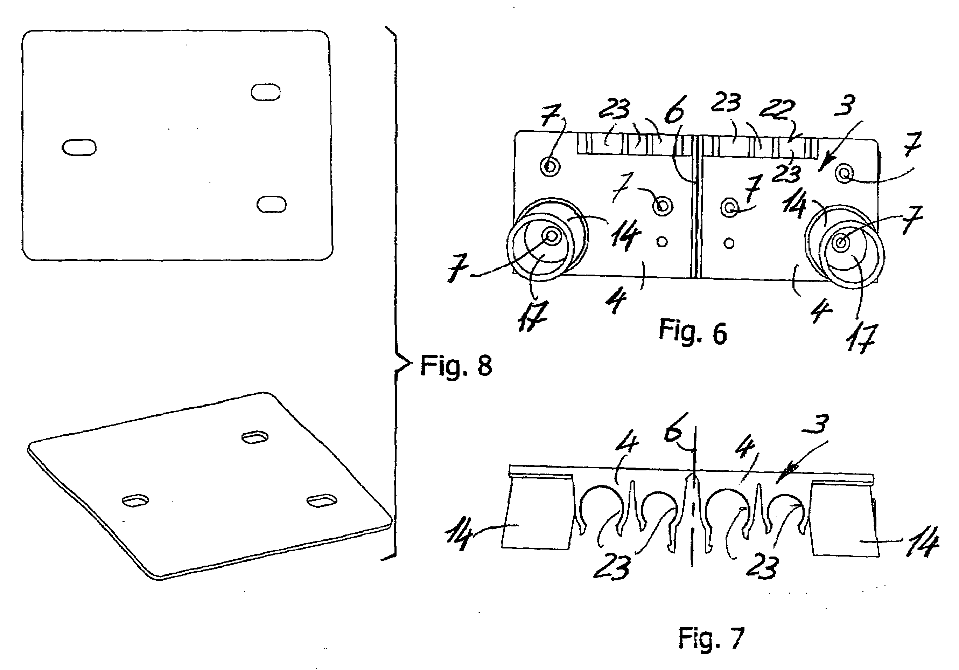

Reference is first made to the embodiment illustrated in Figures 1 to 9.

The case is denoted by 1 and the support is denoted as a whole by the numeral 2. In more details, said support 2 comprises two one-piece external plates 3 which are singularly formed by two plate-halves 4 which are obtainable by breaking said external plates 3 along a weakened middle separation line or plane 6.

Each plate-half 4 is provided with three holes 7 for, not shown, screws, which latter are to be inserted in likewise not shown holes made in one side 9 of the case 1 as well as in correspondent holes 11 provided in inside plates 12, wherein self-threading screws having a selflocking nut or the like are used.

In the outer corners of said one-piece plates 3 are provided washer-like seats 13 for respectively housing a housing cup 14 provided for removably housing a leg 16, preferably a telescopic one. The bottoms 17 of said housing cups 14 are centrally drilled for the thoughgoing of said screws 7 and on the outer side of said cup bottoms 17 are provided preferably crosswise placed notches 18 for a not rotatable engagement on ribs 19 provided in said washer-like seats 13 of the one-piece plates 3.

For obtaining a quick and removable but not slipping off coupling of the legs 16 into the housing cups 14 in the latter, and in the correspondent end 21 of said rods 16, are provided not shown bayonet-like coupling conformations, or the like.

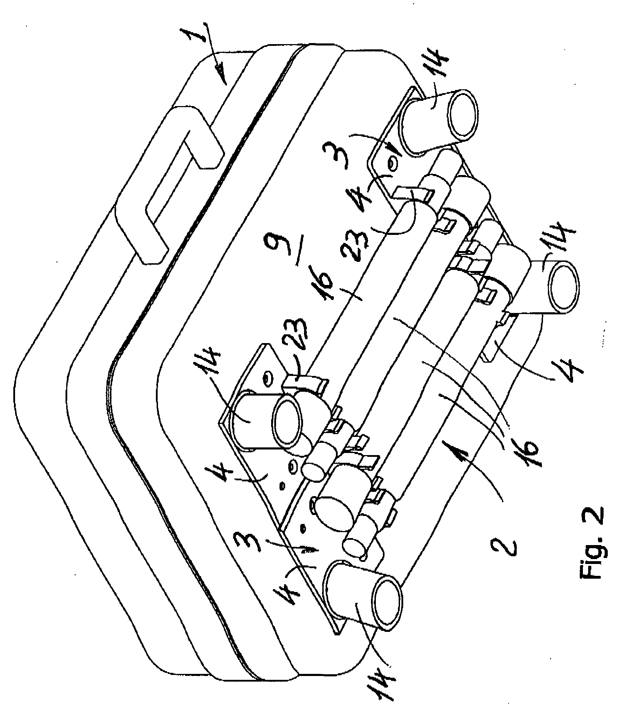

On the internal and opposite edges said one-piece plates 3 have four elastically deformable clip-like open collars 23 for housing respectively a leg 16 in the non-use position, as shown in Figure 2. From the latter it is inferable that for room and symmetry purposes said legs 16 are housed with coupling ends 21 alternatively placed with leg ends having a smaller diameter. In Figure 2 to 7 is also shown that said housing cups are provided with the longitudinal axis thereof slightly slanting outwards in order to achieve a greater bearing surface, and therefore a better case installation stability, as shown in Figure 1.

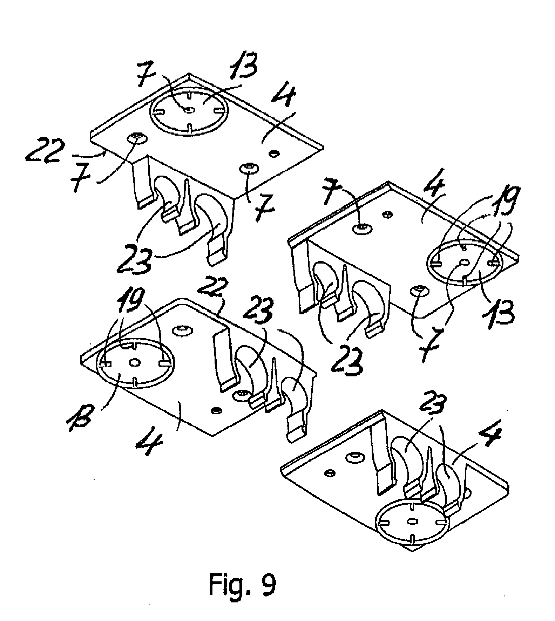

The separated disposition of the external plate-halves 4 in the case of assembling the support 2 on a case 1 having a middle-large size is inferable from Figure 9.

### Handling

Starting from the non-use housing of the components of the support 2, as shown in figure 2, the assembling of said support 2 is simply carried out by removing the legs 16 from the clip-like open collars 23 and inserting said legs, after the telescopic-like elongation thereof, into said housing cups 14 and with a short rotation of the legs for fixing the latter in the use position.

The replacement of said support components is carried out by disassembling steps in the reverse sequence.

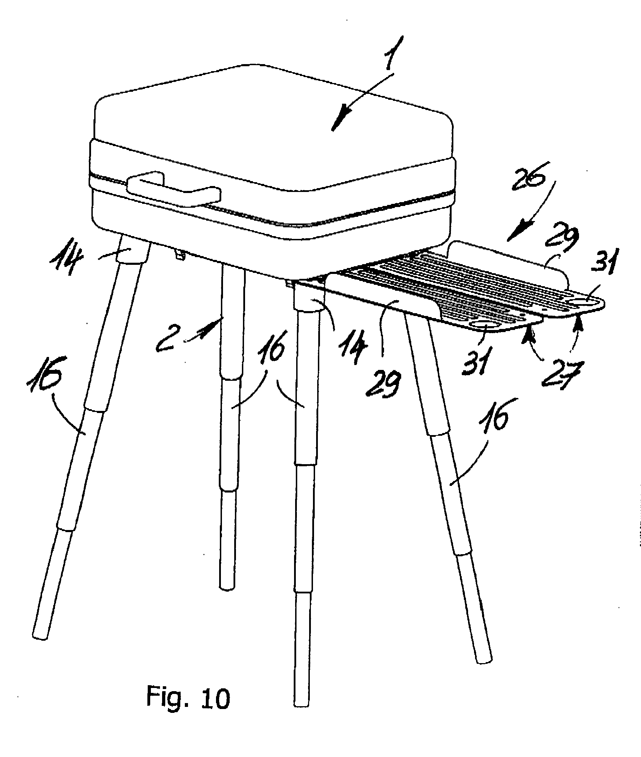

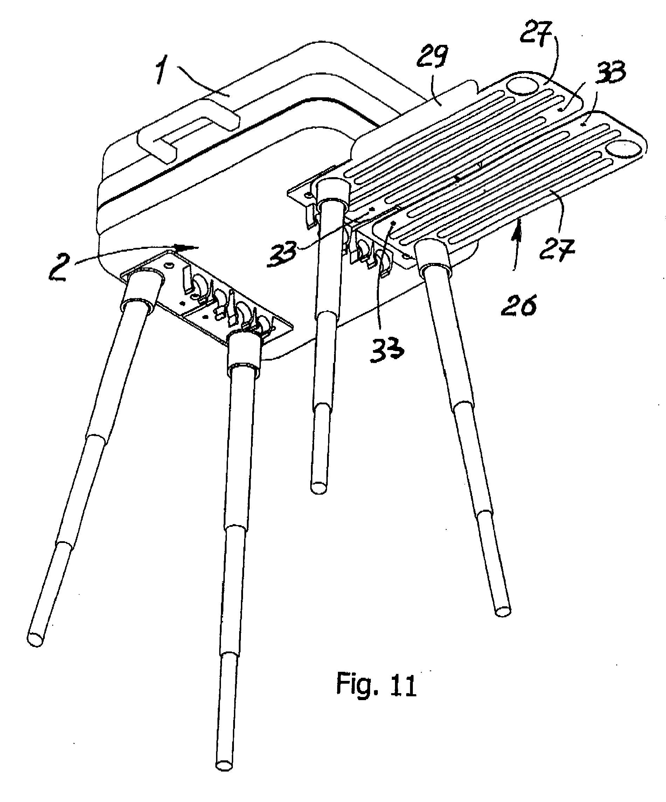

The version shown in the Figures 10 to 13 differs only for the fact that the support 2 is additionally provided with a table-like supporting element 26 which in the assembled use position is overhanging and, in the shown embodiment, is formed by two brackets 27.

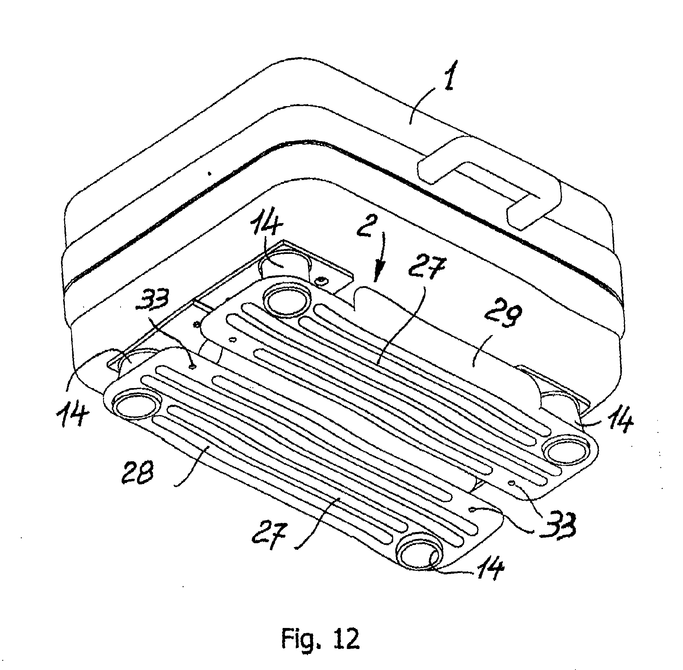

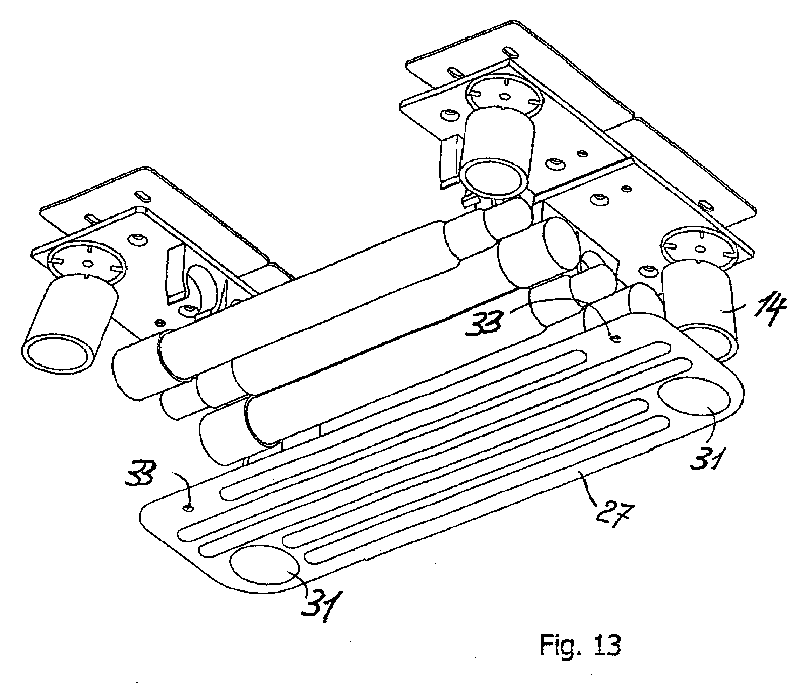

As shown in particularly in the Figures 12 and 13 each bracket 27 has the conformation of a ribbed plate 28 having a longitudinal wing 29 and is provided with corner holes 31 for the replacement, with clearance, in the non-use position on respectively an housing seat 14 of two one-piece or external plate-halves 3 and 4, respectively, with said wing 29 facing the case 1.

In the replacement or non-use position said brackets 27 are removably supported on the underlying leg pipes of said legs 16 by means of, not shown, elastic clip-like bumps which are integrally molded on the brackets 27.

The brackets 27 are secured in the installed position by means of, not shown, wing nuts, which are inserted in corresponding holes in the inside plates 12, in the associated side 9 of the case 1, in the external plates 3 and 4, respectively, as well as a hole 33 in the brackets 27, wherein with this embodiment said brackets 27 may be installed at choice on the one or the other lateral side of the case 1.

In another embodiment the external plates 3 and 4, respectively, are directly secured to the case 1 by means of an adhesive or a biadhesive tape, wherein this teaching allows to eliminate said inside plates 12 as well as the drilling of the large side 9 of the case 1.

In praxis those skilled in the art could provide several modifications and variations concerning, for example, the construction of the case telescopic legs, for example provided with length adjusting means, the completion of the proposed support by means of a covering or coating oscillating element which may be closed by a zipper which extends along three U-shaped case edges, and so on without leaving the scope of the present invention.

## Claims

1. Support for cases, in particular made of a rigid material like plastic, metal sheet, for example of aluminium alloys, and the like,
**characterized in that** it comprises:
two or four case external plates, each of which is provided with one or two cup-like seats adapted to housing respectively one leg for the assembling thereof, as well as elastic clip-like open collars adapted to housing said case legs in the replacement position thereof, and
inside plates adapted to be secured to said external plates by means of screws which also traverse corresponding holes provided in the case side assembled with the support.

2. Support according to claim 1, **characterized in that** respectively two case external plates form a single one-piece plate having a size provided for middle-small cases, like small suitcases, wherein said one-piece plate is adapted to be divided in two plate-halves which can be assembled at a distance from one another on a middle-large sized case.

3. Support according to claims 1 and 2, **characterized in that** each external case plate provided with said housing cup-like seats and said clip-like open collars is an integrated one-piece plate.

4. Support according to claims 1 and 2, **characterized in that** said cup-like seats are adapted to be engaged with said external plates with a not rotatable coupling with the latter and a screw which may be secured to a respective inside plate.

5. Support according to claim 4, **characterized in that** the coupling between each cup-like seat and the associated external plate is provided, on said external plate, a washer-like seat having a central hole for a screw and radial ribs adapted to be engaged by notches provided on the external side of the bottom of said cup-like seat which bottom is also provided with a hole for a troughgoing screw which is securable on the associated inside plate.

6. Support according to claim 4, **characterized in that** the disposition of said cup-like seats on the associated external plate is carried out with a seat axis which is slightly slanted diagonally outwards so that the case installation surface is enlarged.

7. Support according to claims 1 and 2, **characterized in that** for securing said external plates with each inside plate three or more screws are provided which are placed for example on the vertexes of a polygon, wherein one of said screws is housed in a middle hole in the bottom of a respective cup-like seat.

8. Support according to one or more of the claims 1 to 7, **characterized in that** it is additionally provided with a table-like supporting cantilevered element in the installed position.

9. Support according to claim 8, **characterized in that** said supporting element is made in the form of two brackets like a ribbed plate having a delimitation wing which in the installed position projects upwards and in the replaced position projects towards the case.

10. Support according to claims 8 and 9, **characterized in that** said projecting brackets are provided with elastic clip-like open collars adapted to be fastened on the underlying case legs in the support replaced position

11. Support according to claims 1 and 2, **characterized in that** said external and inside plates are made of plastic or metal.

12. Support according to one or more of the claims 2 to 11, **characterized in that** the securing of said external plates on the case is made by glueing or by means of a biadhesive tape, wherein said cup-like seats are directly secured to the respective associated external plate so that the inside plates are unnecessary.

13. Suitcase, in particular case made of rigid material, for example plastic, aluminium and aluminium alloy sheet, **characterized in that** it is provided with a support according to one or more of the claims 1 to 10.

14. Case according to claim 13, **characterized in that** it is provided with a support covering in the form of an envelope made of rigid material or of a case coating, wherein said covering may be removably associated to the case, for example by means of a zipper which extends along three U-shaped case edges.
